# EUROPEAN PATENT SPECIFICATION

(11) **EP 3 165 370 B1**
(45) Date of publication and mention of the grant of the patent: **15.07.2020**
(21) Application number: 16002140.8
(22) Date of filing: 05.10.2016
(51) Int. Cl.: B41J 2/21, B41J 2/205

(54) **IMAGE PROCESSING APPARATUS AND IMAGE PROCESSING METHOD**
BILDVERARBEITUNGSVORRICHTUNG UND BILDVERARBEITUNGSVERFAHREN
APPAREIL ET PROCÉDÉ DE TRAITEMENT DES IMAGES

(30) Priority: 30.10.2015 JP 2015214855
(43) Date of publication of application: 10.05.2017
(73) Proprietor: Canon Kabushiki Kaisha, Ohta-ku Tokyo (JP)
(72) Inventor: Marumoto, Yoshitomo, Tokyo (JP); Tsuboi, Hitoshi, Tokyo (JP); Mabuchi, Hidehisa, Tokyo (JP); Ushiyama, Takayuki, Tokyo (JP)
(74) Representative: WESER & Kollegen Patentanwälte PartmbB

(56) References cited:
- EP-A- 2 422 984
- EP-A1- 3 162 574
- WO-A1-01/89845
- JP-A- 2010 228 286
- US-A1- 2010 118 318
- US-A1- 2010 245 439
- US-A1- 2012 188 562
- US-A1- 2012 194 595
- US-A1- 2014 292 862

## Description

### BACKGROUND OF THE INVENTION

### Field of the Invention

The present invention relates to an image processing apparatus according to the preamble of claim 1 and an image processing method according to the preamble of claim 9. More specifically, the present invention relates to a technology of generating print data when a printing operation is performed by using a print head including two-dimensionally arranged nozzles, in which a plurality of nozzle groups, each of which includes a plurality of nozzles ejecting inks to a conveyed print medium in the same landing order, are arranged according to different landing orders.

### Description of the Related Art

In a print head including two-dimensionally arranged nozzles, a plurality of nozzle arrays including nozzles arranged in a direction intersecting a print medium conveying direction are arranged in the conveying direction. Then, the nozzles are shifted from each other between the plurality of nozzle arrays arranged in the conveying direction and thus an image is printed on the print medium by all the plurality of nozzle arrays to have a desired resolution.

In the case of a single pass printing system that completes a printing operation by using such a print head while conveying the print medium once, the printing operation can be performed at a relatively high printing speed. Meanwhile, the printing operation is performed by the same nozzle in the print medium conveying direction. Therefore, if variation in property of the nozzle and a mechanical slip occur in the printing apparatus, an image feature caused by the variation or the mechanical slip continuously lies to be visually recognized as a streak.

As for this problem, Japanese Patent Laid-Open No. 2010-228286 discloses a technology of suppressing streaks by correcting the size of a printed dot. Specifically, the sizes of the dots printed by adjacent nozzles increase as a distance between the dots printed by the adjacent nozzles among the nozzles arranged in a nozzle arrangement direction increases. Accordingly, since it is possible to suppress a gap from being formed between the dots printed by the adjacent nozzles, it is possible to reduce streaks as a result.

However, ink droplets which are ejected from the adjacent nozzles and are landed on the print medium are attracted to one another and thus a blank is formed in a direction opposite to the attraction direction. Consequently, a new problem arises in that white streaks are generated. On the contrary, since the technology disclosed in Japanese Patent Laid-Open No. 2010-228286 is just used to fill the gap formed between the adjacent nozzles by adjusting the ink droplet ejection amount, the above-described problem cannot be solved. That is, the technology disclosed in US 2010/245439 A1 cannot fill the blank formed at the opposite side to the attracted dots with an ink droplet.

### SUMMARY OF THE INVENTION

The present invention provides an image processing apparatus according to claim 1 and an image processing method according to claim 9 capable of reducing a streak caused by a blank formed when inks ejected from adjacent nozzles and landed on a print medium are attracted to one another.

The present invention in its first aspect provides an image processing apparatus as specified in claims 1 to 8.

The present invention in its second aspect provides an image processing method as specified in claims 9 to 15.

According to the above-described configuration, it is possible to reduce the streak caused by the blank formed when inks ejected from adjacent nozzles and landed on a print medium are attracted to one another.

Further features of the present invention will become apparent from the following description of exemplary embodiments (with reference to the attached drawings).

### BRIEF DESCRIPTION OF THE DRAWINGS

Fig. 1 is a diagram schematically illustrating an example of a two-dimensional arrangement of nozzles of a print head;
Figs. 2A to 2C are diagrams illustrating a streak generated when a printing operation is performed by the print head including two-dimensionally arranged nozzles illustrated in Fig. 1;
Fig. 3 is a perspective view illustrating a schematic configuration of an inkjet printing apparatus according to an embodiment;
Fig. 4 is a block diagram illustrating a printing system according to an embodiment;
Fig. 5 is a block diagram illustrating a flow of an image process performed by a host device and a printing apparatus of the printing system of the embodiment;
Fig. 6 is a diagram showing a relation among Figs. 6A to 6H;
Figs 6A to 6H are diagrams illustrating a general dither matrix which is a threshold matrix;
Fig. 7 is a diagram illustrating a result obtained by binarizing image data in which all pixels have a density value of 50% ("128" in 8 bits) based on the dither matrix illustrated in Figs. 6A to 6H;
Fig. 8 is a diagram illustrating a relation between a threshold of a threshold matrix and a nozzle arrangement of a print head according to a first embodiment of the invention;
Figs. 9A to 9C are diagrams illustrating an example of an image binarized by the threshold and the content of the threshold matrix according to the first embodiment of the invention;
Fig. 10 is a diagram illustrating a result obtained by binarizing image data of a predetermined density value based a general dither matrix not involving with the embodiment in a dither matrix corresponding to an 8-bit/256 gradation;
Fig. 11 is a diagram illustrating a binarization result obtained when the embodiment is applied to the two-dimensionally arranged nozzles having a nozzle in a last landing order every sixteen nozzle in a dither matrix having the same size as that of Fig. 10;
Figs. 12A and 12B are diagrams illustrating an average run length (an average value of a run length) every nozzle array in each binarized print data illustrated in Figs. 10 and 11;
Fig. 13 is a diagram schematically illustrating a two-dimensional arrangement of nozzles of a print head according to a second embodiment of the invention; and
Figs. 14A and 14B are diagrams illustrating streaks generated when a printing operation is performed by the print head including two-dimensionally arranged nozzles illustrated in Fig. 13.

### DESCRIPTION OF THE EMBODIMENTS

Hereinafter, embodiments will be described in detail with reference to the drawings.

First, a streak generation mechanism to be solved by the present invention will be described prior to the description of the embodiments of the invention.

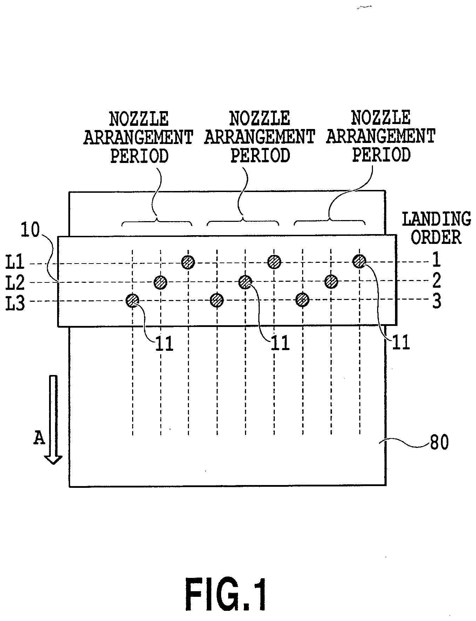

Fig. 1 is a schematic diagram illustrating an example of a two-dimensional arrangement of nozzles of a print head. As illustrated in Fig. 1, a print head 10 is configured to perform a printing operation on a print medium 80 conveyed in a direction of an arrow A in Fig. 1 according to a single pass printing system. Then, the print head 10 includes a plurality of nozzles 11 respectively located on imaginary lines L1 to L3 in a direction orthogonal to the direction A which is a conveying direction. In the nozzle arrangement of the example illustrated in Fig. 1, the nozzles on the line L2 are shifted from the nozzles on the line L1 by a distance corresponding to one pixel pitch. Similarly, the nozzles on the line L3 are shifted from the nozzles on the line L2 by a distance corresponding to one pixel pitch. In this way, the nozzles are arranged. When the printing operation is performed by the print head, inks ejected from the nozzles on the line L1 are landed on the conveyed print medium 80 as a first landing order. In this way, inks ejected from the nozzles on the line L2 are landed on the conveyed print medium 80 as a second landing order and inks ejected from the nozzles on the line L3 are landed on the conveyed print medium 80 as a third landing order.

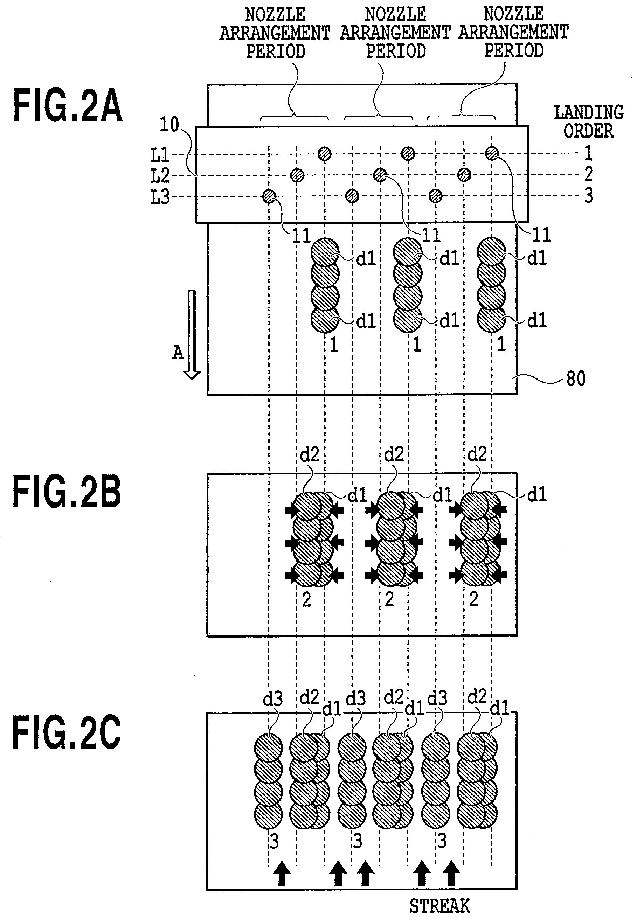

Figs. 2A to 2C are diagrams illustrating streaks that may be generated when the printing operation is performed by the print head including two-dimensionally arranged nozzles illustrated in Fig. 1. As illustrated in Fig. 2A, the inks ejected from the nozzles 11 on the first line L1 in the first landing order are landed on the print medium 80 as ink droplets d1. In this state, for example, when a printing speed is relatively fast or a print medium has low ink absorbability, there is a case where the ink droplets d1 landed on the print medium may not be completely absorbed or dried when the inks ejected from the nozzles having the later landing orders are landed on the print medium. In this case, when the inks are ejected from the nozzles on the line L2 in the second landing order, the ink droplets d1 in the first landing order and the ink droplets d2 in the second landing order are attracted to one another as illustrated in Fig. 2B. Then, the dots are formed at positions near the center between the original landing positions of the ink droplets d1 and d2. As a result, a gap is formed at a position opposite to the center position of each of the ink droplets d1 in the first landing order and the ink droplets d2 in the second landing order. In the example of the nozzle arrangement illustrated in Fig. 2A, the ink droplets d3 in the third landing order are landed between the pairs of first and second ink droplets as illustrated in Fig. 2C. However, the gap formed as described above cannot be filled by the dots of the ink droplets d3 and thus white streaks are formed at positions indicated by the arrows in Fig. 2C.

The present invention solves the problem of the streaks and the embodiments of the present invention will be described below.

### (First Embodiment)

A first embodiment of the present invention relates to an embodiment that sets a threshold corresponding to a nozzle having a last landing order so that an average value of the number of continuous off-dots (print data indicating a non-ink ejection) increases when print data is generated by binarizing multi-value image data using a threshold matrix.

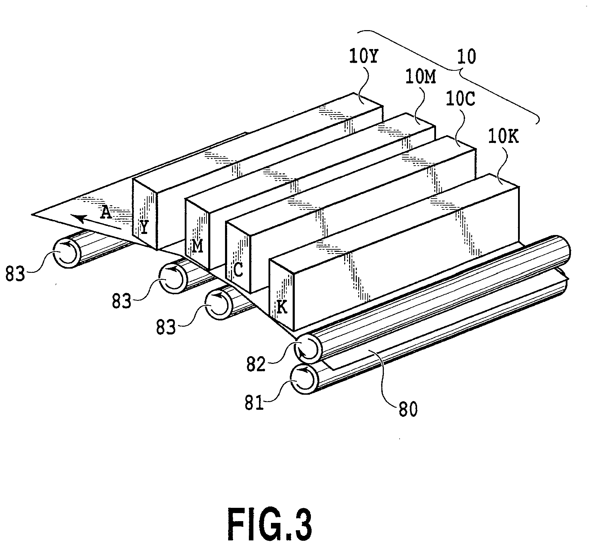

Fig. 3 is a perspective view illustrating a schematic configuration of an inkjet printing apparatus according to the embodiment of the present invention. The print head 10 includes print heads 10Y, 10M, 10C, and 10K which respectively eject inks of yellow (Y), magenta (M), cyan (C), and black (K). Each print head includes two-dimensionally arranged nozzles as illustrated in Fig. 1 for example.

The print medium 80 such as a sheet is conveyed by a conveying roller 81 which is rotationally driven by a driving mechanism (not illustrated) and a pinch roller 82 which presses the print medium 80 while facing the conveying roller 81. A conveying path of the print medium 80 is provided with a support roller 83 which rotates in a following manner while supporting the print medium. In the above-described configuration, inks of different colors are ejected from the print heads 10K, 10C, 10M, and 10Y according to this order onto the print medium 80 which is conveyed in the direction of the arrow A in the drawings and an image corresponding to the print data is printed on the print medium 80. That is, the printing operation is performed according to the single pass printing system that completes the printing operation by relatively conveying the print medium once with respect to the fixed print head 10.

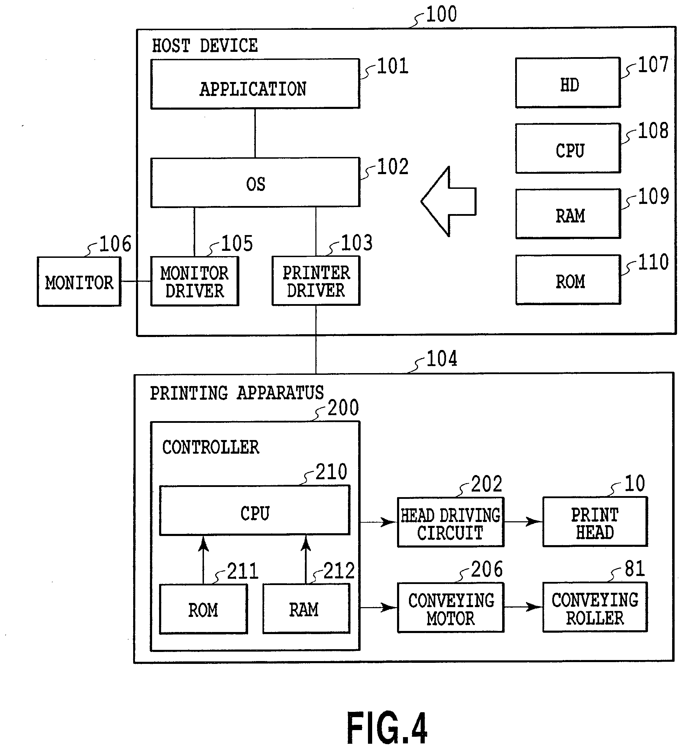

Fig. 4 is a block diagram illustrating the printing system according to the embodiment of the present invention including the inkjet printing apparatus illustrated in Fig. 3 as a printing apparatus. The printing system of the embodiment is configured by including a host device 100 and a printing apparatus 104.

In the host device 100, a CPU 108 operates software including an application 101, a printer driver 103, and a monitor driver 105 via an operating system 102 according to various programs stored in a hard disk (HD) 107 or a ROM 110. At this operation, the RAM 109 is used as a work area when various processes are performed. The monitor driver 105 is software that performs a process of generating image data displayed on the monitor 106. The printer driver 103 is software that converts the image data transmitted from the application software 101 to an OS 102 into multi-value or binary data to be received by the printing apparatus 104 and transmits the converted data to the printing apparatus 104.

In the printing apparatus 104, a controller 200 controls the driving of the print head 10 or the conveying roller 81 based on a printing control signal and print data transmitted from the host device 100. Specifically, a head driving circuit 202 drives the print head 10 to eject an ink. A conveying motor 206 generates a driving force for rotating the conveying roller 81 conveying a printing sheet. The controller 200 includes a CPU 210 which is configured as a microprocessor, a ROM 211 which stores a control program, and a RAM 212 which is used when the CPU processes image data. The ROM 211 stores a control program used to control the printing of the single pass printing system of the embodiment. The controller 200 controls the head driving circuit 202 and the conveying motor 206 for, for example, the single pass printing system. Specifically, the controller 200 reads a correspondence relation between an image position and a nozzle position of each color head from the ROM 211 in accordance with a control program and transmits print data corresponding to the image position for each nozzle in accordance with the conveying position of the print medium 80 in the single pass printing system. Further, the controller 200 controls the head driving circuit 202 so that an ink is ejected from a print head 10 in accordance with the image data of each color print head.

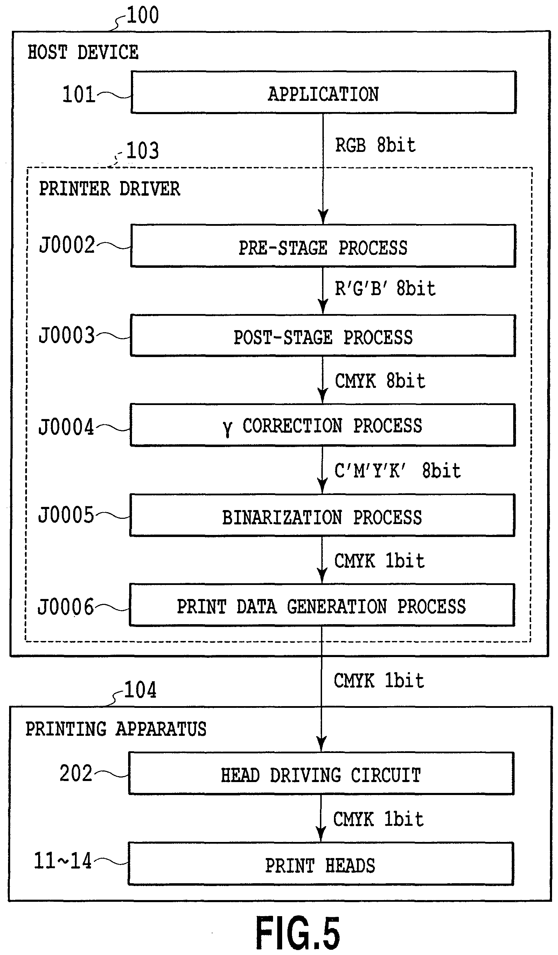

Fig. 5 is a block diagram illustrating a flow of an image processing performed by the host device 100 and the printing apparatus 104 in the printing system of the embodiment.

In the host device 100, a user can use the application 101 to generate image data for printing performed by the printing apparatus 104. For the printing operation, the image data generated by the application 101 is transmitted to the printer driver 103. The printer driver 103 performs a pre-stage process J0002, a post-stage process J0003, a γ correction process J0004, a binarization process J0005, and a print data generation process J0006.

In the pre-stage process J0002, a color gamut conversion is performed so that color of a color gamut displayed on the monitor 106 by the application 101 via the monitor driver 105 is converted into color of a color gamut reproducible by the printing apparatus 104. Specifically, image data R, G, and B shown by 8 bits are converted into 8-bit data R', G' and B' within the color gamut of the printing apparatus 104 based on a three-dimensional LUT stored in the ROM 110.

Next, in the post-stage process J0003, a signal value conversion is performed so that the converted image data R', G' and B' are shown by four ink colors C, M, Y, and K ejected from the print head 1000 mounted on the printing apparatus 104. Specifically, the 8-bit data R', G', and B' obtained in the pre-stage process J0002 are converted into 8-bit data C, M, Y, and K based on the three-dimensional LUT stored in the ROM 1 10.

In the y correction process J0004, a y correction process is performed on the 8-bit data C, M, Y, and K obtained by the post-stage process J0003. Specifically, a one-dimensional conversion is performed so that the 8-bit data C', M', Y', and K' obtained by color separation are linearly correlated with gradation characteristics of the printing apparatus.

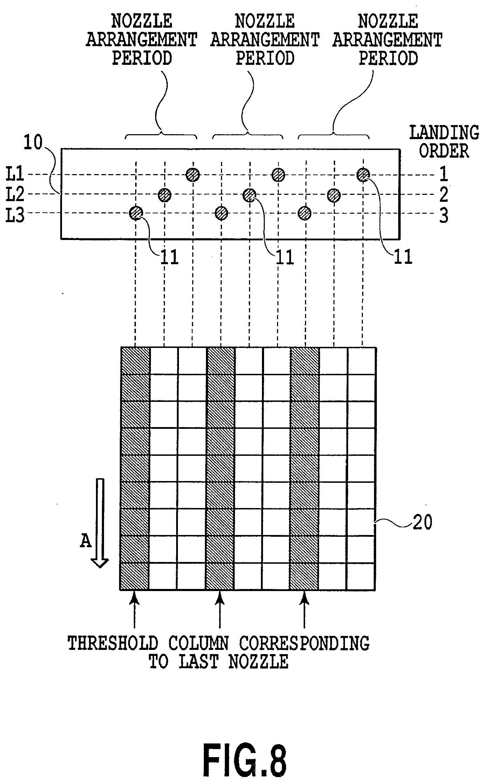

In the binarization process J0005, the 8-bit data C', M', Y', and K' obtained from the y correction is converted into 1-bit data C, M, Y, and K by the use of a threshold matrix (dither) to be described later with reference to Fig. 8 and the like. The binarized print data is 1-bit information that is set to determine whether to print a dot (an on-dot) or not to print a dot (an off-dot) in each of pixels corresponding to the printing resolution of the printing apparatus 104.

In the print data generation process J0006, printing control data is generated in such a manner that print medium information, printing quality information, and control information involving with a printing operation such as a sheet feeding method are given to four colors of 1-bit data generated by the binarization process J0005.

The printing control data generated in this way is supplied from the host device 100 to the printing apparatus 104.

Subsequently, the supplied binary print data is transmitted to the head driving circuit 202. Then, each nozzle of the print head 1000 ejects an ink at a predetermined timing according to the binary print data.

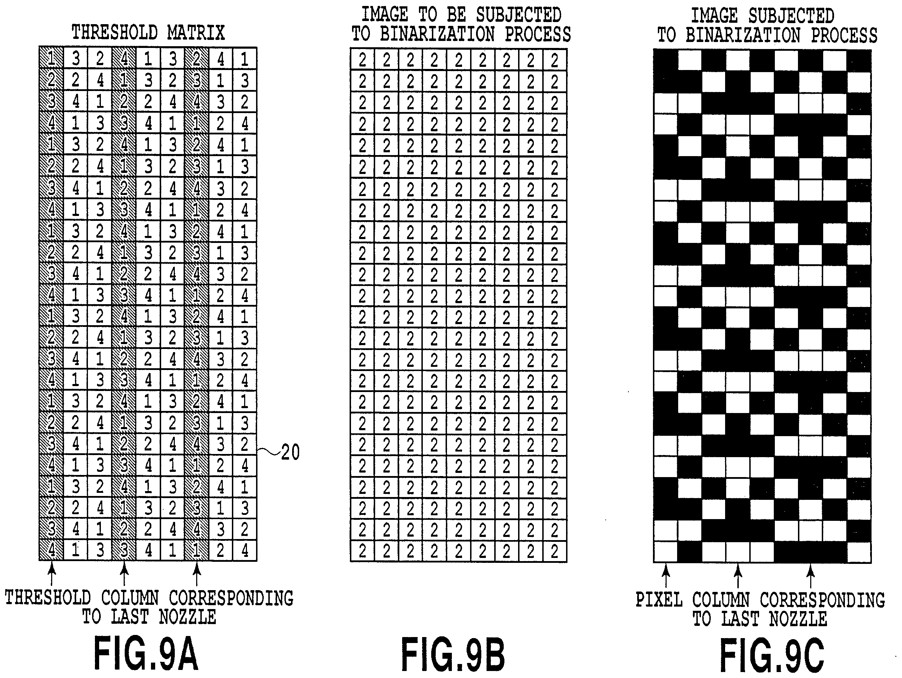

In the first embodiment of the present invention, a dither matrix (a threshold matrix) to be described with reference to Fig. 9A and the like is used in the above-described binarization process J0005. The threshold matrix of the embodiment has a size which is equal to or larger than at least a longitudinal period (corresponding to a nozzle interval) of the nozzles arranged in the print head as shown in Fig. 1 and sets a threshold of a row corresponding to a predetermined nozzle corresponding to a nozzle arrangement period in a print medium conveying direction so that an average value of the number of continuous off-dots (a non-ink ejection) increases.

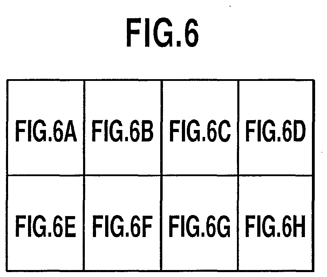

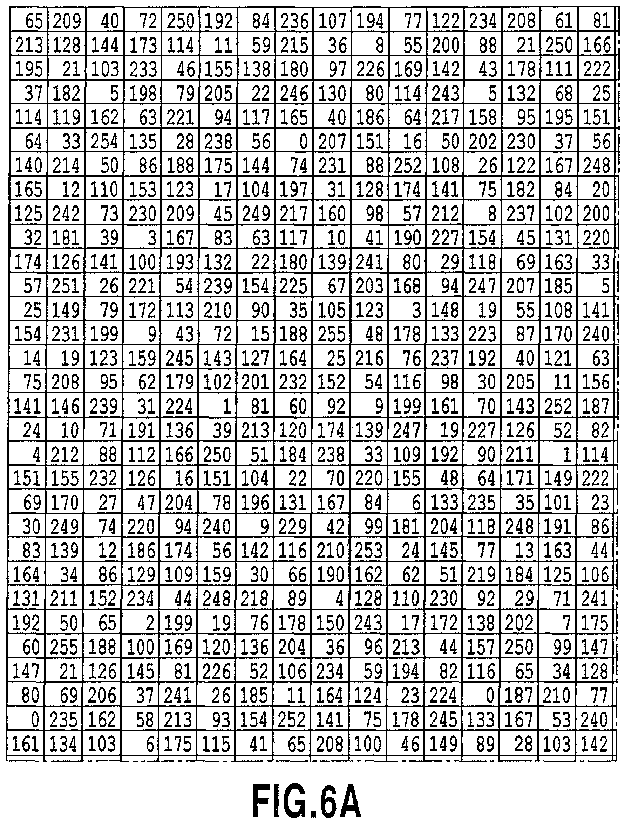

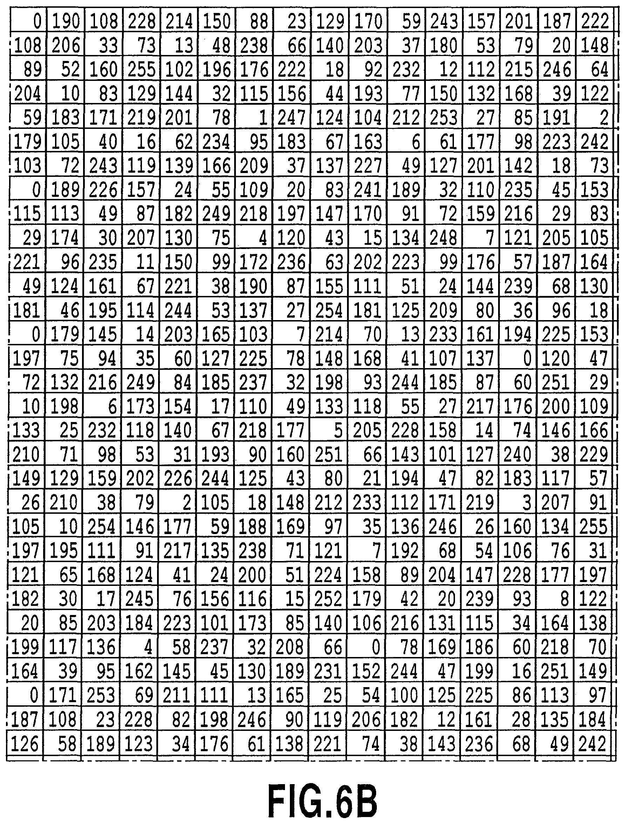

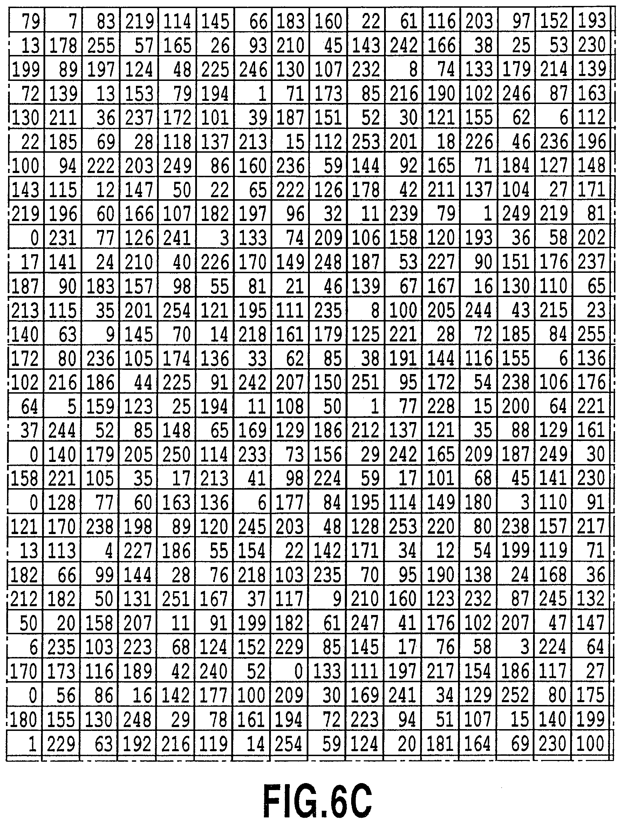

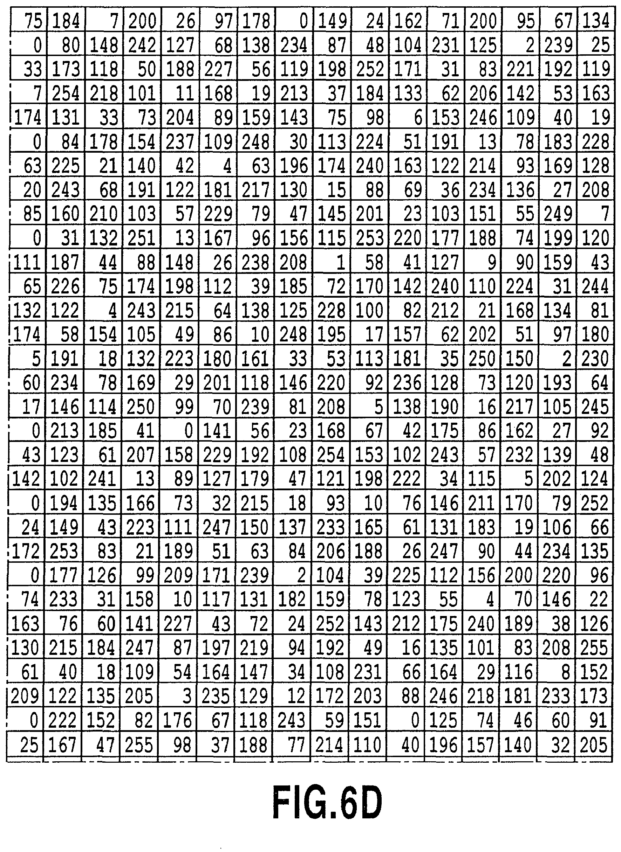

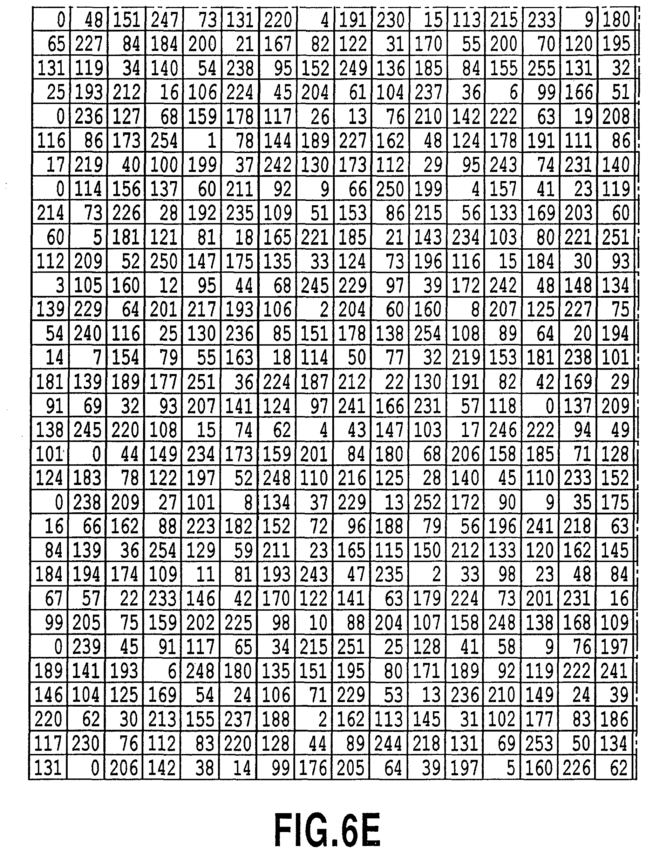

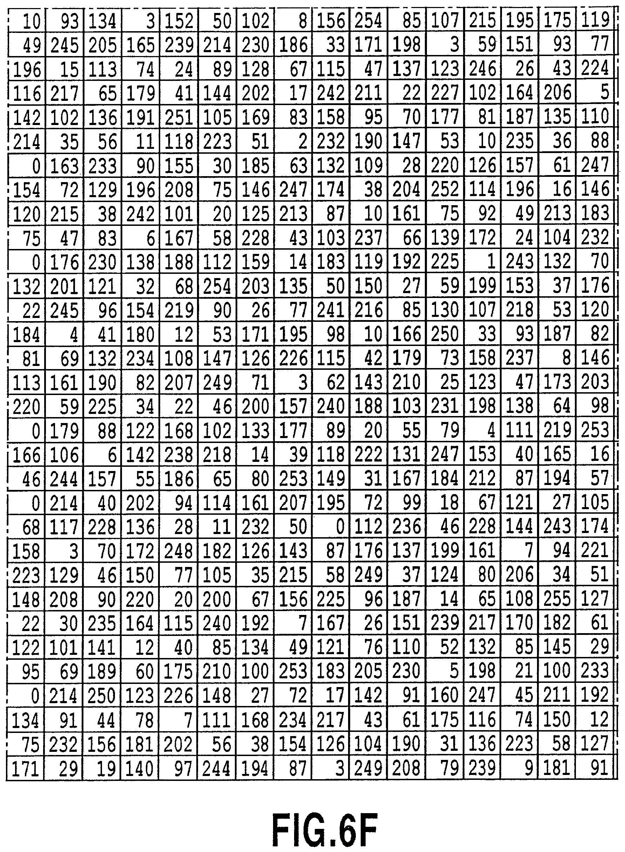

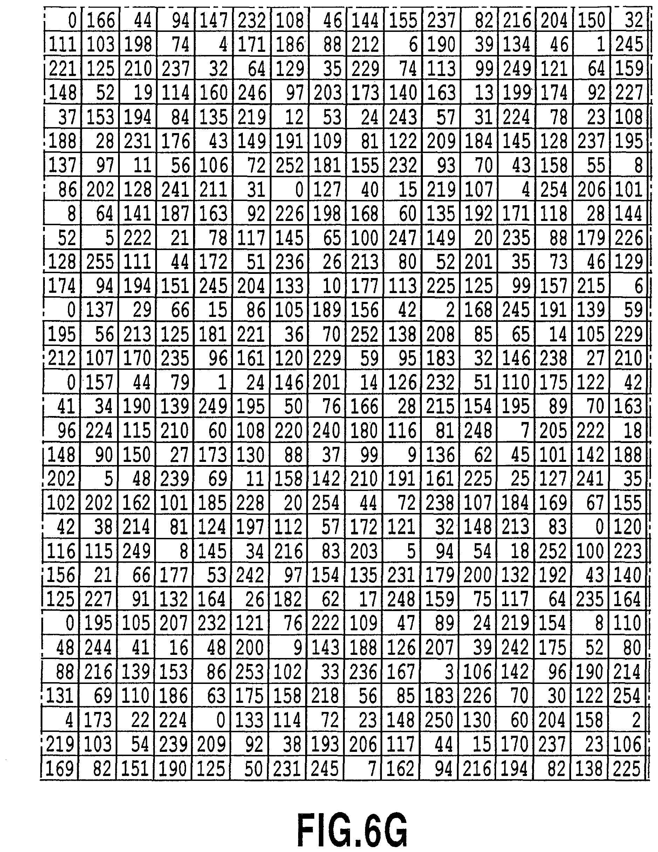

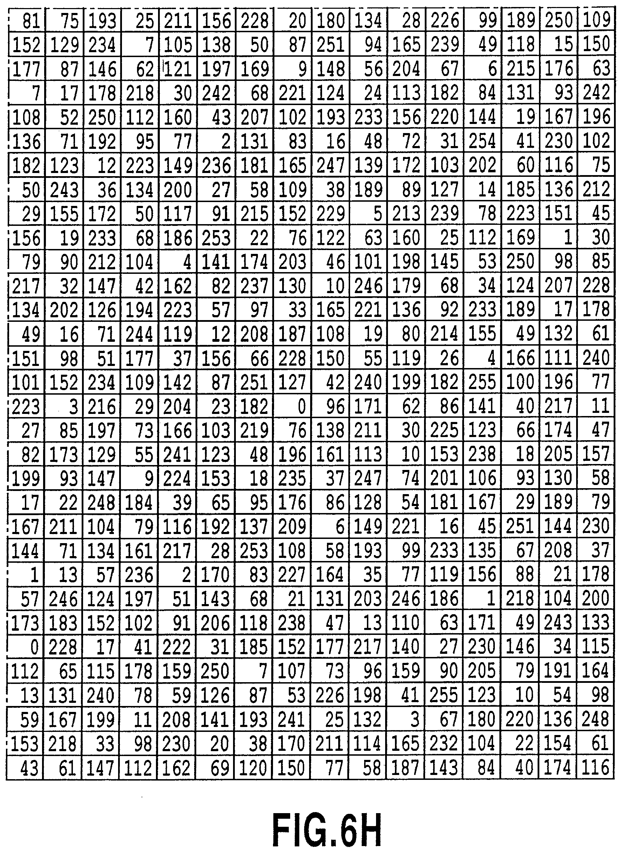

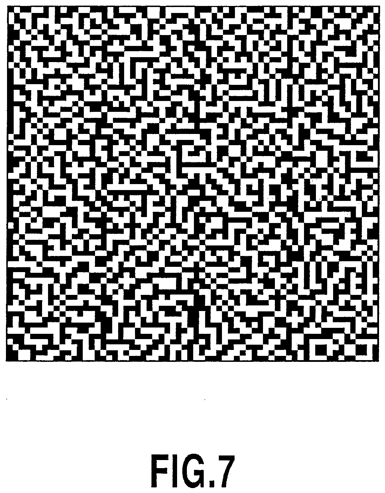

Figs. 6A to 6H are diagrams illustrating a general dither matrix as a threshold matrix. The example illustrated in Figs. 6A to 6H corresponds to 8 bits data and has a value from 0 to 255 as a threshold. Fig. 7 is a diagram illustrating a result obtained by binarizing image data in which all pixels have a density value of 50% ("128" in 8 bits) based on the dither matrix illustrated in Figs. 6A to 6H.

Fig. 8 is a diagram illustrating a relation between the threshold of the threshold matrix and the nozzle arrangement of the print head according to the first embodiment of the invention.

The threshold matrix 20 of the embodiment sets each threshold so that the average value of the number of continuous binarized off-dots in the threshold column (the column indicated by the arrow in Fig. 8) corresponding to the nozzle of the latest (third) line L3 in Fig. 2A becomes smaller than the average value of the number of continuous off-dots of the other threshold columns.

Figs. 9A to 9C are diagrams illustrating the content of the threshold matrix according to the first embodiment of the present invention and an example of an image binarized by the threshold matrix. In order to simplify the description and the drawing, the threshold does not correspond to 8 bits, but correspond to two bits of "1" to "4". Then, an example will be described in which image data having a density of "2" in all pixels before the binarization process, as illustrated in Fig. 9B, is binarized.

When the image data illustrated in Fig. 9B is binarized by the use of the threshold matrix 20 illustrated in Fig. 9A, an image (print data or ejection data) after the binarization process illustrated in Fig. 9C is obtained. Here, if the value (the density) of the pixel to be subjected to the binarization process is equal to or larger than the threshold of the corresponding pixel of the threshold matrix, the pixel will be set as an "on-pixel (an ink ejection pixel)" (hereinafter, this pixel will be referred to as an on-dot). If it is not the case, the pixel will be set as an "off-pixel (a non-ink ejection pixel)" (hereinafter, this pixel will be referred to as an off-dot). As a result of the above-described process, as illustrated in Fig. 9C, an image subjected to the binarization process is obtained so that the number of continuous off-dots for the threshold column corresponding to the nozzle in the last landing order becomes larger than that of the other threshold columns.

Here, "the number of continuous off-dots" is defined as an average value of a run length of off-dots in the embodiment. The "average value of the run length" of the off-dots is a value obtained by dividing the number of the off-dots of a corresponding nozzle array by the number of the sets of the continuous off-dots (including one off-dot). For example, in an image corresponding to the nozzle array indicated by the leftmost arrow illustrated in Fig. 9C, the number of the off-dots is twelve and the number of sets of the continuous off-dots (all sets including two off-dots) is six sets. Thus, the average value of the run length becomes "2". In an image corresponding to the nozzle array indicated by the rightmost arrow, the average value of the run length is "2" in the same way. In an image corresponding to the nozzle array indicated by the center arrow, the number of the off-dots is twelve and the number of the sets of the continuous off-dots is seven (five sets of two off-dots and two sets of one off-dot). Thus, the average value of the run length becomes about "1.7." On the other hand, in a column corresponding to the nozzle not having the last landing order, the number of the off-dots is twelve and the number of the sets of the continuous off-dots is twelve (all sets including one off-dots). Thus, the average value of the run length becomes "1."

In this way, in the embodiment, the threshold of the threshold matrix illustrated in Fig. 9A is set so that the number of continuous off-dots in the threshold column corresponding to the nozzle array having the last landing order becomes larger than the number of continuous off-dots corresponding to the nozzle array having a different landing order. Specifically, the threshold of the threshold column corresponding to the nozzle array having the last landing order in the threshold matrix is set so that the continuous threshold values are arranged in the continuous pixels ("1", "2", "3", "4") as illustrated in Fig. 9A. Therefore, it is possible to increase the possibility that the off-dots are continuously disposed with respect to the density value of the image data. On the other hand, the threshold of the threshold column corresponding to the other nozzle array is set so that the continuous threshold values are arranged in the noncontinuous pixels ("3", "2", "4", "1").

When the threshold matrix is set in this way, the binary print data illustrated in Fig. 9C can be obtained in the case of the image data in which all pixels have a density value of "2" as illustrated in Fig. 9B. More specifically, it is possible to obtain print data in which the number of continuous off-dots in the nozzle array having the last landing order is larger than the number of continuous off-dots in the nozzle array having a different landing order.

That is, in the printing operation performed by the nozzle array in which the number of continuous off-dots increases, many gaps exist between the ink droplets ejected from the nozzle array and landed on the print medium and thus the attraction between landed ink droplets (in the nozzle array direction) is prevented. As a result, the possibility increases in which the ink droplets are widened in a different nozzle array direction and contact the ink droplets corresponding to different nozzles. As a result, it is possible to reduce the white streaks by filling the gap between the ink droplets corresponding to different nozzles.

Further, such an action can be obtained by controlling, for example, the number of isolated on-dots instead of the number of continuous off-dots. However, in this case, the isolated on-dots are connected to each other to form a large dot as a printing result in accordance with a change in volume of the ejected ink droplet or the ink absorbability of the print medium on which the ink is landed and thus the number of intended isolated on-dots cannot be accurately controlled. Thus, it is desirable to control the number of continuous off-dots as described above.

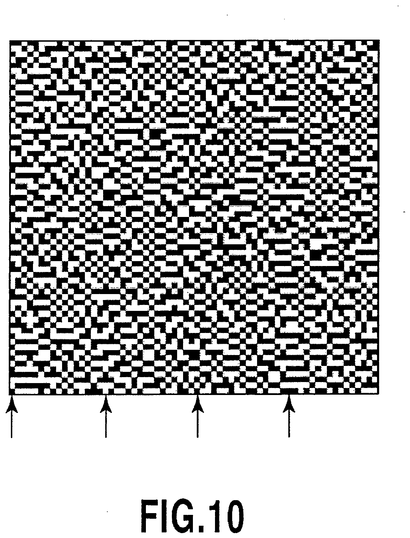

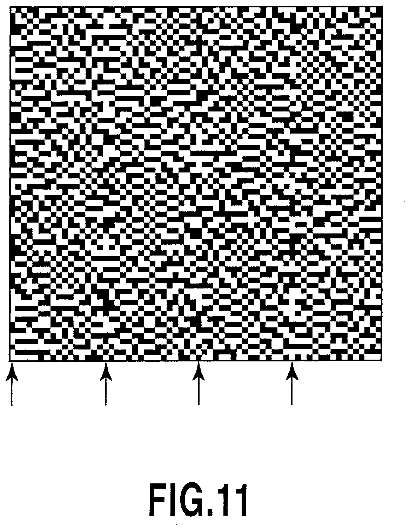

Fig. 10 is a diagram illustrating a result obtained by binarizing image data in which all pixels have a density value of 50% based on a general dither matrix not involving with the present invention in a dither matrix corresponding to an 8-bit/256 gradation. On the other hand, Fig. 11 is a diagram illustrating a result obtained by binarizing the same image data when the present invention is applied for the two-dimensionally arranged nozzles having the nozzle in the last landing order every sixteen nozzle by using the dither matrix having the same size.

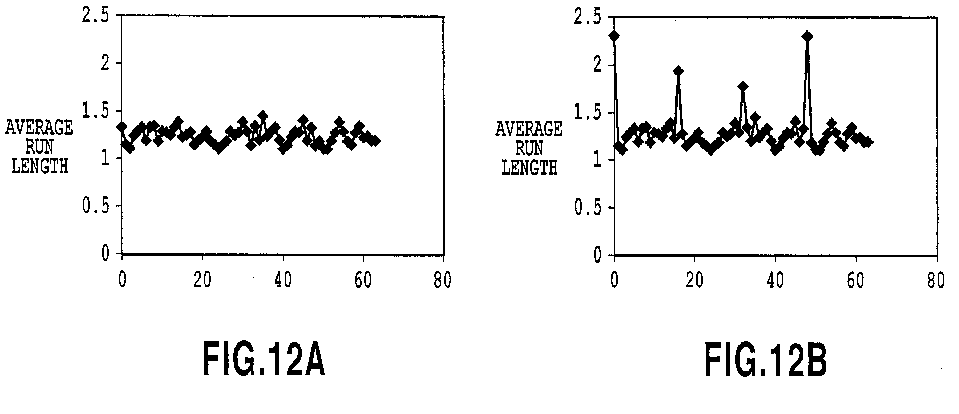

Figs. 12A and 12B are diagrams illustrating an average run length (an average value of a run length) every nozzle array in each binarized print data illustrated in Figs. 10 and 11 respectively. As illustrated in Fig. 12B, when the present invention is applied to the threshold column corresponding to the nozzle array indicated by the arrow in Fig. 11, as illustrated in Figs. 9A to 9C, it is understood that the average run length (the number of continuous off-dots) becomes larger than that of the case where the present invention is not applied as illustrated in Fig. 12A.

### (Second Embodiment)

A second embodiment of the present invention sets the number of continuous off-dots in the corresponding threshold column of not only the nozzle array having the last landing order but also the nozzle arrays from the last landing order to several landing orders to be larger than those of the other threshold columns.

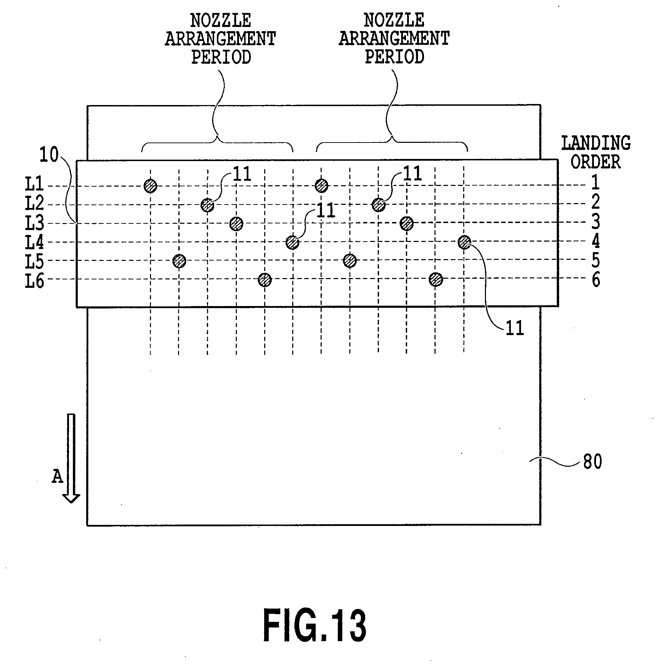

Fig. 13 is a diagram schematically illustrating a two-dimensional arrangement of the nozzles of the print head according to the second embodiment of the present invention. In the print head 10 of the embodiment, the nozzles on the line L2 are shifted from the nozzles on the line L1 as a whole by a distance corresponding to a two-pixel pitch in a direction along the line. On the other hand, the nozzles on the line L3 are shifted from the nozzles on the line L2 as a whole by a distance corresponding to a one-pixel pitch. Further, the nozzles on the line L4 are shifted from the nozzles on the line L3 as a whole by a distance corresponding to a two-pixel pitch, the nozzles on the line L5 are shifted from the nozzles on the line L4 as a whole by a distance corresponding to a four-pixel pitch in the opposite direction, and finally the nozzles on the line L6 are shifted from the nozzles on the line L5 by a distance corresponding to a three-pixel pitch. In this way, the nozzles are arranged. When the printing operation is performed by the print head of the embodiment, the inks ejected from the nozzles on the line L1 are landed on the conveyed print medium 80 in the first landing order, the inks ejected from the nozzles on the line L2 are landed thereon in the second landing order, the inks ejected from the nozzles on the line L3 are landed thereon in the third landing order, the inks ejected from the nozzles on the line L4 are landed thereon in the fourth landing order, the inks ejected from the nozzles on the line L5 are landed thereon in the fifth landing order, and the inks ejected from the nozzles on the line L6 are landed thereon in the sixth (last) landing order.

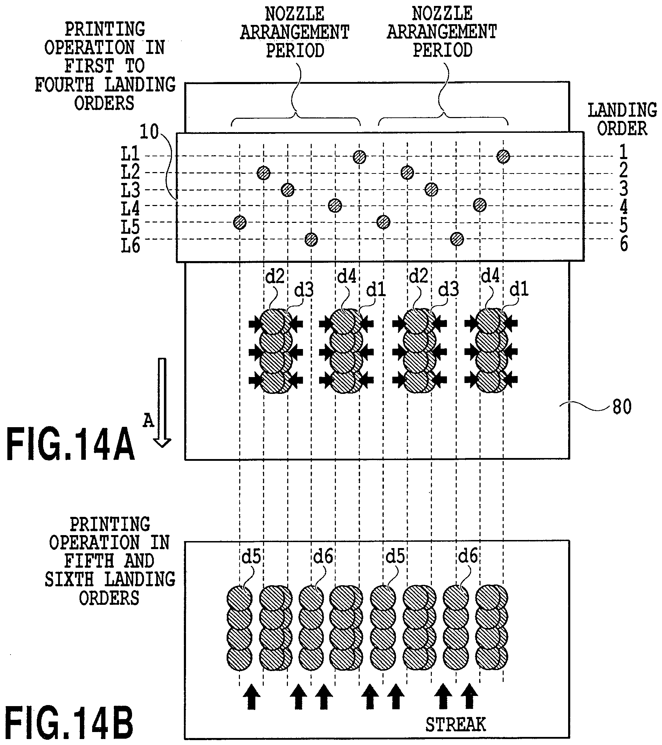

Figs. 14A and 14B are diagrams illustrating streaks that may be generated when the printing operation is performed by using the print head including two-dimensionally arranged nozzles illustrated in Fig. 13.

As illustrated in Fig. 14A, when the printing operation is performed by the print head having the nozzle arrangement illustrated in Fig. 13, the inks ejected from the nozzles 11 of the line L1 having the first landing order are landed on the print medium 80 as the ink droplets d1. On the contrary, the inks are ejected from the nozzles 11 of the line L4 having the fourth landing order so that the ink droplets d1 in the first landing order and the ink droplets d4 in the fourth landing order are attracted to one another. Then, a dot is formed at a position near the center between the original landing positions of the ink droplets d1 and d4, as illustrated in Fig. 14B. Further, the inks ejected from the nozzles 11 of the line L2 having the second landing order are landed on the print medium 80 as the ink droplets d2. On the contrary, the inks are ejected from the nozzles 11 of the line L3 having the third landing order so that the ink droplets d2 in the second landing order and the ink droplets d3 in the third landing order are attracted to one another. Then, a dot is formed a position near the center between the original landing positions of the ink droplets d2 and d3, as illustrated in Fig. 14B. When the ink droplets are deviated in response to the above-described landing order, gaps are formed between the ink droplets of the first to fourth landing orders, similarly to the example illustrated in Figs. 2A to 2C, and the gaps are located at a position corresponding to the nozzles in the fifth and sixth landing orders. Then, even when the printing operation is performed at a position corresponding to the inks ejected from the fifth and sixth nozzles, white streaks are generated at positions indicated by the arrows in Fig. 14B, if the present invention is not applied.

On the contrary, in the embodiment, the threshold of the threshold columns corresponding to the nozzles having the fifth and sixth landing orders in the threshold matrix is set so that the number of continuous off-dots is larger than that of the threshold column corresponding to the other nozzle array, as described above with reference to Figs. 9A to 9C.

### (Other Embodiments)

In the above-described embodiments, one print head has two-dimensionally arranged nozzles, but the application of the present invention is not limited to those embodiments. For example, three print heads ejecting the same color of inks may have two-dimensionally arranged nozzles in total so that the first print head has a nozzle arrangement of the line L1, the next print head has a nozzle arrangement of the line L2, and the last print head has a nozzle arrangement of the line L3 as illustrated in Fig. 1.

Further, in the above-described embodiments, the binarization process using the threshold matrix is performed by the host device, but the invention is not, of course, limited to the embodiment. For example, the binarization process using the threshold matrix may be performed by the inkjet printing apparatus. In the specification, a device that performs at least the binarization process is called the image processing apparatus.

## Claims

1. An image processing apparatus (100, 104) that generates ejection data for ink ejection by using a print head (10), the print head having a first nozzle array (L3) in which nozzles (11) for ejecting a predetermined color of inks are arranged in a predetermined direction and a second nozzle array (L1, L2) in which nozzles (11) for ejecting the predetermined color of inks are arranged in the predetermined direction, the first nozzle array and the second nozzle array being arranged in an intersection direction (A) intersecting the predetermined direction, the ink ejection being performed by that the print head ejects the predetermined color of inks to a print medium (80) in order of the second nozzle array and the first nozzle array while relatively moving the print medium with respect to the print head in the intersection direction, the image processing apparatus comprising:
a generating unit (103) configured to generate the ejection data so that, in a case where image data is input in which the pixels corresponding to the first nozzles in the first nozzle array and the pixels corresponding to the second nozzles in the second nozzle array have the same value, the image processing apparatus being **characterized in that** a continuous number of pixels corresponding to the first nozzles becomes larger than the continuous number of pixels corresponding to the second nozzles, the continuous number being a number of continuous pixels where non-ink ejection are set in the intersection direction.

2. The image processing apparatus according to claim 1, wherein the data generating unit uses a threshold matrix in which a threshold value is set corresponding to each of a plurality of pixels to generate the ejection data so that the ejection data indicating ink ejection is set for a pixel that has a value of the image data being equal to or larger than the threshold value set in the threshold matrix and the ejection data indicating non-ink ejection is set for a pixel that has a value of the image data being smaller than the threshold value set in the threshold matrix, and
the threshold matrix sets the threshold values corresponding to the pixels so that the number of continuous pixels in the intersection direction in the pixels to which the threshold value larger than a first value is set and which correspond to the first nozzle is larger than the number of continuous pixels in the intersection direction in the pixels to which the threshold value larger than the first values are set and which correspond to the second nozzle.

3. The image processing apparatus according to claim 1 or 2, wherein the first nozzle array is located more downstream than the second nozzle array in a moving direction of the print medium.

4. The image processing apparatus according to any of claims 1 to 3, wherein the first nozzle array includes at least a nozzle array in a last landing order of ejected ink.

5. The image processing apparatus according to any of claims 1 to 3, wherein the first nozzle array includes at least a nozzle array in a last landing order of ejected ink and nozzle arrays from the last landing order to several landing orders of ejected ink.

6. The image processing apparatus according to any of claims 1 to 5, wherein a nozzle arrangement of the print head has a nozzle arrangement period corresponding to a nozzle interval of the second nozzle array in a nozzle array direction.

7. The image processing apparatus according to any of claims 1 to 6, further comprising a printing unit configured to cause the print head to eject ink based on the ejection data to print an image.

8. The image processing apparatus according to any one of claims 1 to 7, wherein a position of the second nozzle array in the predetermined direction is shifted from a position of the first nozzle array in the predetermined direction by a pitch in the unit of a pixel.

9. An image processing method for generating ejection data for ink ejection by using a print head, the print head having a first nozzle array in which nozzles for ejecting a predetermined color of inks are arranged in a predetermined direction and a second nozzle array in which nozzles for ejecting the predetermined color of inks are arranged in the predetermined direction, the first nozzle array and the second nozzle array being arranged in an intersection direction intersecting the predetermined direction, the ink ejection being performed by that the print head ejects the predetermined color of inks to a print medium in order of the second nozzle array and the first nozzle array while relatively moving the print medium with respect to the print head in the intersection direction, the image processing method comprising:
a generating step of generating the ejection data so that, in a case where image data is input in which the pixels corresponding to the first nozzles in the first nozzle array and the pixels corresponding to the second nozzles in the second nozzle array have the same value, the image processing method being further **characterized in that** a continuous number of pixels corresponding to the first nozzles becomes larger than the continuous number of pixels corresponding to the second nozzles, the continuous number being a number of continuous pixels where non-ink ejection are set in the intersection direction.

10. The image processing method according to claim 9, wherein the data generating step uses a threshold matrix in which a threshold value is set corresponding to each of a plurality of pixels to generate the ejection data so that the ejection data indicating ink ejection is set for a pixel that has a value of the image data being equal to or larger than the threshold value set in the threshold matrix and the ejection data indicating non-ink ejection is set for a pixel that has a value of the image data being smaller than the threshold value set in the threshold matrix, and
the threshold matrix sets the threshold values corresponding to the pixels so that the number of continuous pixels in the intersection direction in the pixels to which the threshold value larger than a first value is set and which correspond to the first nozzle is larger than the number of continuous pixels in the intersection direction in the pixels to which the threshold value larger than the first values are set and which correspond to the second nozzle.

11. The image processing method according to claim 9 or 10, wherein the first nozzle array is located more downstream than the second nozzle array in a moving direction of the print medium.

12. The image processing method according to any of claims 9 to 11, wherein the first nozzle array includes at least a nozzle array in a last landing order of ejected ink.

13. The image processing method according to any of claims 9 to 11, wherein the first nozzle array includes at least a nozzle array in a last landing order of ejected ink and nozzle arrays from the last landing order to several landing orders of ejected ink.

14. The image processing method according to any of claims 9 to 13, wherein a nozzle arrangement of the print head has a nozzle arrangement period corresponding to a nozzle interval of the second nozzle array in a nozzle array direction.

15. The image processing method according to any of claims 9 to 14, further comprising a printing step of causing the print head to eject ink based on the ejection data to print an image.

## Patentansprüche

1. Bildverarbeitungsvorrichtung (100, 104), die Ausstoßdaten zum Ausstoßen von Tinte unter Verwendung eines Druckkopfs (10) erzeugt, wobei der Druckkopf aufweist: ein erstes Düsenfeld (L3), in dem Düsen (11) zum Ausstoßen von Tinte einer vorbestimmten Farbe in einer vorbestimmten Richtung angeordnet sind, und ein zweites Düsenfeld (L1, L2), in dem Düsen (11) zum Ausstoßen der Tinte vorbestimmter Farbe in der vorbestimmten Richtung angeordnet sind, wobei das erste Düsenfeld und das zweite Düsenfeld in einer kreuzenden Richtung (A) angeordnet sind, die die vorbestimmte Richtung kreuzt, wobei der Tintenausstoß durchgeführt wird, indem der Druckkopf die Tinte vorbestimmter Farbe nacheinander aus dem zweiten Düsenfeld und dem ersten Düsenfeld auf ein Druckmedium (80) ausstößt, während das Druckmedium in Bezug auf den Druckkopf in der kreuzenden Richtung bewegt wird, wobei die Bildverarbeitungsvorrichtung umfasst:
eine Erzeugungseinheit (103), die konfiguriert ist, die Ausstoßdaten so zu erzeugen, dass, falls Bilddaten eingegeben werden, in welchen die den ersten Düsen im ersten Düsenfeld entsprechenden Pixel und die den zweiten Düsen im zweiten Düsenfeld entsprechenden Pixel den gleichen Wert aufweisen, die Bildverarbeitungsvorrichtung **dadurch gekennzeichnet ist, dass** eine durchgängige Anzahl den ersten Düsen entsprechender Pixel größer wird als die durchgängige Anzahl den zweiten Düsen entsprechender Pixel, wobei die durchgängige Anzahl eine Anzahl durchgängiger Pixel in der kreuzenden Richtung ist, für die Nichtausstoßen von Tinte eingestellt ist.

2. Bildverarbeitungsvorrichtung nach Anspruch 1, wobei die Datenerzeugungseinheit eine Schwellenwertmatrix verwendet, in der ein einem jeweiligen von mehreren Pixeln entsprechender Schwellenwert eingestellt ist, um die Ausstoßdaten so zu erzeugen, dass die einen Tintenausstoß angebenden Ausstoßdaten für einen Pixel eingestellt werden, der einen Wert der Bilddaten aufweist, der gleich groß wie oder größer als der in der Schwellenwertmatrix eingestellte Schwellenwert ist, und die Ausstoßdaten, die ein Nichtausstoßen von Tinte angeben, für einen Pixel eingestellt werden, der einen Wert der Bilddaten aufweist, welcher kleiner als der in der Schwellenwertmatrix eingestellte Schwellenwert ist, und
die Schwellenwertmatrix die den Pixeln entsprechenden Schwellenwerte so einstellt, dass die Anzahl durchgängiger Pixel in der kreuzenden Richtung in den Pixeln, für die der Schwellenwert größer als ein erster Wert eingestellt ist und die der ersten Düse entsprechen, größer als die Anzahl durchgängiger Pixel in der kreuzenden Richtung in den Pixeln ist, für die der Schwellenwert größer als die ersten Werte eingestellt ist und die der zweiten Düse entsprechen.

3. Bildverarbeitungsvorrichtung nach Anspruch 1 oder 2, wobei sich das erste Düsenfeld in einer Bewegungsrichtung des Druckmediums weiter stromabwärts als das zweite Düsenfeld befindet.

4. Bildverarbeitungsvorrichtung nach einem der Ansprüche 1 bis 3, wobei das erste Düsenfeld mindestens ein Düsenfeld an einer Position enthält, an der ausgestoßene Tinte zuletzt platziert wird.

5. Bildverarbeitungsvorrichtung nach einem der Ansprüche 1 bis 3, wobei das erste Düsenfeld mindestens ein Düsenfeld an einer Position, an der ausgestoßene Tinte zuletzt platziert wird, und Düsenfelder an anderen Platzierungspositionen ausgestoßener Tinte enthält.

6. Bildverarbeitungsvorrichtung nach einem der Ansprüche 1 bis 5, wobei eine Düsenanordnung des Druckkopfs eine Düsenanordnungsperiode aufweist, die einem Düsenintervall des zweiten Düsenfelds in einer Düsenfeldrichtung entspricht.

7. Bildverarbeitungsvorrichtung nach einem der Ansprüche 1 bis 6, weiterhin umfassend eine Druckeinheit, die konfiguriert ist, den Druckkopf zu veranlassen, basierend auf den Ausstoßdaten Tinte auszustoßen, um ein Bild zu drucken.

8. Bildverarbeitungsvorrichtung nach einem der Ansprüche 1 bis 7, wobei eine Position des zweiten Düsenfelds in der vorbestimmten Richtung von einer Position des ersten Düsenfelds in der vorbestimmten Richtung um einen Abstand in der Einheit eines Pixels verschoben wird.

9. Bildverarbeitungsverfahren zum Erzeugen von Ausstoßdaten zum Tintenausstoß unter Verwendung eines Druckkopfs, wobei der Druckkopf aufweist: ein erstes Düsenfeld, in dem Düsen zum Ausstoßen von Tinte einer vorbestimmten Farbe in einer vorbestimmten Richtung angeordnet sind, und ein zweites Düsenfeld, in dem Düsen zum Ausstoßen der Tinte vorbestimmter Farbe in der vorbestimmten Richtung angeordnet sind, wobei das erste Düsenfeld und das zweite Düsenfeld in einer kreuzenden Richtung angeordnet sind, die die vorbestimmte Richtung kreuzt, wobei der Tintenausstoß durchgeführt wird, indem der Druckkopf die Tinte vorbestimmter Farbe auf ein Druckmedium nacheinander aus dem zweiten Düsenfeld und dem ersten Düsenfeld ausstößt, während er das Druckmedium in Bezug auf den Druckkopf in der kreuzenden Richtung bewegt, wobei das Bildverarbeitungsverfahren umfasst:
einen Erzeugungsschritt zum Erzeugen der Ausstoßdaten, sodass, falls Bilddaten eingegeben werden, in welchen die den ersten Düsen im ersten Düsenfeld entsprechenden Pixel und die den zweiten Düsen im zweiten Düsenfeld entsprechenden Pixel denselben Wert aufweisen, das Bildverarbeitungsverfahren weiterhin **dadurch gekennzeichnet ist, dass** eine durchgängige Anzahl den ersten Düsen entsprechender Pixel größer wird als die durchgängige Anzahl den zweiten Düsen entsprechender Pixel, wobei die durchgängige Anzahl eine Anzahl durchgängiger Pixel in der kreuzenden Richtung ist, für die Nichtausstoßen von Tinte eingestellt ist.

10. Bildverarbeitungsverfahren nach Anspruch 9, wobei der Datenerzeugungsschritt eine Schwellenwertmatrix verwendet, in der ein einem jeweiligen von mehreren Pixeln entsprechender Schwellenwert eingestellt ist, um die Ausstoßdaten so zu erzeugen, dass die einen Tintenausstoß angebenden Ausstoßdaten für einen Pixel eingestellt werden, der einen Wert der Bilddaten aufweist, der gleich groß wie oder größer als der in der Schwellenwertmatrix eingestellte Schwellenwert ist, und die Nichtausstoßen von Tinte angebenden Ausstoßdaten für einen Pixel eingestellt werden, der einen Wert der Bilddaten aufweist, der kleiner als der in der Schwellenwertmatrix eingestellte Schwellenwert ist, und
die Schwellenwertmatrix die den Pixeln entsprechenden Schwellenwerte so einstellt, dass die Anzahl durchgängiger Pixel in der kreuzenden Richtung in den Pixeln, für die der Schwellenwert größer als ein erster Wert eingestellt ist und die der ersten Düse entsprechen, größer als die Anzahl durchgängiger Pixel in der kreuzenden Richtung in den Pixeln ist, für die der Schwellenwert größer als die ersten Werte eingestellt ist und die der zweiten Düse entsprechen.

11. Bildverarbeitungsverfahren nach Anspruch 9 oder 10, wobei sich das erste Düsenfeld in einer Bewegungsrichtung des Druckmediums weiter stromabwärts als das zweite Düsenfeld befindet.

12. Bildverarbeitungsverfahren nach einem der Ansprüche 9 bis 11, wobei das erste Düsenfeld mindestens ein Düsenfeld an einer Position enthält, an der ausgestoßene Tinte zuletzt platziert wird.

13. Bildverarbeitungsverfahren nach einem der Ansprüche 9 bis 11, wobei das erste Düsenfeld mindestens ein Düsenfeld an einer Position, an der ausgestoßene Tinte zuletzt platziert wird, und Düsenfelder an anderen Platzierungspositionen ausgestoßener Tinte enthält.

14. Bildverarbeitungsverfahren nach einem der Ansprüche 9 bis 13, wobei eine Düsenanordnung des Druckkopfs eine Düsenanordnungsperiode aufweist, die einem Düsenintervall des zweiten Düsenfelds in einer Düsenfeldrichtung entspricht.

15. Bildverarbeitungsverfahren nach einem der Ansprüche 9 bis 14, ferner umfassend einen Druckschritt des Veranlassens des Druckkopfs, basierend auf den Ausstoßdaten Tinte auszustoßen, um ein Bild zu drucken.

## Revendications

1. Appareil de traitement d'images (100, 104) qui génère des données d'éjection pour l'éjection d'encre en utilisant une tête d'impression (10), la tête d'impression comportant un premier réseau de buses (L3) dans lequel des buses (11) destinées à éjecter une couleur prédéterminée d'encres sont agencées dans une direction prédéterminée et un deuxième réseau de buses (L1, L2) dans lequel des buses (11) destinées à éjecter la couleur prédéterminée d'encres sont agencées dans la direction prédéterminée, le premier réseau de buses et le deuxième réseau de buses étant agencés dans une direction d'intersection (A) formant une intersection avec la direction prédéterminée, l'éjection d'encre étant effectuée en faisant en sorte que la tête d'impression éjecte la couleur prédéterminée d'encres vers un support d'impression (80) dans l'ordre du deuxième réseau de buses et du premier réseau de buses tout en déplaçant le support d'impression par rapport à la tête d'impression dans la direction d'intersection, l'appareil de traitement d'images comprenant :
une unité de génération (103) configurée pour générer les données d'éjection de manière à ce que, dans un cas où des données d'images sont fournies en entrée, les pixels correspondant aux premières buses dans le premier réseau de buses et les pixels correspondant aux deuxièmes buses dans le deuxième réseau de buses aient la même valeur, l'appareil de traitement d'images étant **caractérisé en ce qu'**un nombre continu de pixels correspondant aux premières buses devient supérieur au nombre continu de pixels correspondant aux deuxièmes buses, le nombre continu étant un nombre de pixels continus où une non-éjection d'encre est définie dans la direction d'intersection.

2. Appareil de traitement d'images selon la revendication 1, dans lequel l'unité de génération de données utilise une matrice de seuils dans laquelle une valeur de seuil est définie en correspondance avec chacun d'une pluralité de pixels pour générer les données d'éjection de façon que les données d'éjection indiquant une éjection d'encre soient définies pour un pixel ayant une valeur des données d'images qui est supérieure ou égale à la valeur de seuil définie dans la matrice de seuils et que les données d'éjection indiquant une non-éjection d'encre soient définies pour un pixel ayant une valeur des données d'images qui est inférieure à la valeur de seuil définie dans la matrice de seuils, et
la matrice de seuils définit les valeurs de seuil correspondant aux pixels de façon que le nombre de pixels continus dans la direction d'intersection dans les pixels pour lesquels la valeur de seuil supérieure à une première valeur est définie et qui correspondent à la première buse soit supérieur au nombre de pixels continus dans la direction d'intersection dans les pixels pour lesquels la valeur de seuil supérieure aux premières valeurs est définie et qui correspondent à la deuxième buse.

3. Appareil de traitement d'images selon la revendication 1 ou 2, dans lequel le premier réseau de buses est situé plus en aval que le deuxième réseau de buses dans une direction de déplacement du support d'impression.

4. Appareil de traitement d'images selon l'une quelconque des revendications 1 à 3, dans lequel le premier réseau de buses comprend au moins un réseau de buses dans un dernier ordre d'impact de l'encre éjectée.

5. Appareil de traitement d'images selon l'une quelconque des revendications 1 à 3, dans lequel le premier réseau de buses comprend au moins un réseau de buses dans un dernier ordre d'impact de l'encre éjectée et des réseaux de buses allant du dernier ordre d'impact à plusieurs ordres d'impact de l'encre éjectée.

6. Appareil de traitement d'images selon l'une quelconque des revendications 1 à 5, dans lequel un agencement de buses de la tête d'impression présente une période d'agencement de buses correspondant à un intervalle entre buses du deuxième réseau de buses dans une direction du réseau de buses.

7. Appareil de traitement d'images selon l'une quelconque des revendications 1 à 6, comprenant en outre une unité d'impression configurée pour amener la tête d'impression à éjecter de l'encre sur la base des données d'éjection pour imprimer une image.

8. Appareil de traitement d'images selon l'une quelconque des revendications 1 à 7, dans lequel une position du deuxième réseau de buses dans la direction prédéterminée est décalée par rapport à une position du premier réseau de buses dans la direction prédéterminée d'un pas égal à une unité de pixel.

9. Procédé de traitement d'images destiné à générer des données d'éjection pour l'éjection d'encre en utilisant une tête d'impression, la tête d'impression comportant un premier réseau de buses dans lequel des buses destinées à éjecter une couleur prédéterminée d'encres sont agencées dans une direction prédéterminée et un deuxième réseau de buses dans lequel des buses destinées à éjecter la couleur prédéterminée d'encres sont agencées dans la direction prédéterminée, le premier réseau de buses et le deuxième réseau de buses étant agencés dans une direction d'intersection formant une intersection avec la direction prédéterminée, l'éjection d'encre étant effectuée en faisant en sorte que la tête d'impression éjecte la couleur prédéterminée d'encres vers un support d'impression dans l'ordre du deuxième réseau de buses et du premier réseau de buses tout en déplaçant le support d'impression par rapport à la tête d'impression dans la direction d'intersection, le procédé de traitement d'images comprenant :
une étape de génération consistant à générer les données d'éjection de façon que, dans un cas où des données d'images sont fournies en entrée, les pixels correspondant aux premières buses dans le premier réseau de buses et les pixels correspondant aux deuxièmes buses dans le deuxième réseau de buses aient la même valeur, le procédé de traitement d'images étant **caractérisé en outre en ce qu'**un nombre continu de pixels correspondant aux premières buses devient supérieur au nombre continu de pixels correspondant aux deuxièmes buses, le nombre continu étant un nombre de pixels continus où une non-éjection d'encre est définie dans la direction d'intersection.

10. Procédé de traitement d'images selon la revendication 9, dans lequel l'étape de génération de données utilise une matrice de seuils dans laquelle une valeur de seuil est définie en correspondance avec chacun d'une pluralité de pixels pour générer les données d'éjection de façon que les données d'éjection indiquant une éjection d'encre soient définies pour un pixel ayant une valeur des données d'images qui est supérieure ou égale à la valeur de seuil définie dans la matrice de seuils et que les données d'éjection indiquant une non-éjection d'encre soient définies pour un pixel ayant une valeur des données d'images qui est inférieure à la valeur de seuil définie dans la matrice de seuils, et
la matrice de seuils définit les valeurs de seuil correspondant aux pixels de façon que le nombre de pixels continus dans la direction d'intersection dans les pixels pour lesquels la valeur de seuil supérieure à une première valeur est définie et qui correspondent à la première buse soit supérieur au nombre de pixels continus dans la direction d'intersection dans les pixels pour lesquels la valeur de seuil supérieure aux premières valeurs est définie et qui correspondent à la deuxième buse.

11. Procédé de traitement d'images selon la revendication 9 ou 10, dans lequel le premier réseau de buses est situé plus en aval que le deuxième réseau de buses dans une direction de déplacement du support d'impression.

12. Procédé de traitement d'images selon l'une quelconque des revendications 9 à 11, dans lequel le premier réseau de buses comprend au moins un réseau de buses dans un dernier ordre d'impact de l'encre éjectée.

13. Procédé de traitement d'images selon l'une quelconque des revendications 9 à 11, dans lequel le premier réseau de buses comprend au moins un réseau de buses dans un dernier ordre d'impact de l'encre éjectée et des réseaux de buses allant du dernier ordre d'impact à plusieurs ordres d'impact de l'encre éjectée.

14. Procédé de traitement d'images selon l'une quelconque des revendications 9 à 13, dans lequel un agencement de buses de la tête d'impression présente une période d'agencement de buses correspondant à un intervalle entre buses du deuxième réseau de buses dans une direction du réseau de buses.

15. Procédé de traitement d'images selon l'une quelconque des revendications 9 à 14, comprenant en outre une étape d'impression consistant à amener la tête d'impression à éjecter de l'encre sur la base des données d'éjection pour imprimer une image.
